(19) **Europäisches Patentamt**

**European Patent Office**

**Office européen des brevets**

(11) **EP 0 665 665 B1**

(12) **FASCICULE DE BREVET EUROPEEN**

(45) Date de publication et mention
de la délivrance du brevet:
**16.05.2001 Bulletin 2001/20**

(51) Int Cl.⁷: $H04L\ 7/04$, $H04B\ 7/08$

(21) Numéro de dépôt: **95400070.9**

(22) Date de dépôt: **13.01.1995**

(54) **Procédé et dispositif permettant à un modem de se synchroniser sur un transmetteur de données numériques par voie hertzienne en présence de brouilleurs**

Verfahren und Vorrichtung, die es einem Modem erlauben, sich auf einen Sender digitaler Daten über einen Funkkanal in Anwesenheit von Störern zu Synchronisieren

Method and device enabling a modem to synchronize on a transmitter of digital data via a radio channel in the presence of interferences

(84) Etats contractants désignés:
**DE FR GB IT**

(30) Priorité: **21.01.1994 FR 9400634**

(43) Date de publication de la demande:
**02.08.1995 Bulletin 1995/31**

(73) Titulaire: **THOMSON-CSF**
**75008 Paris (FR)**

(72) Inventeurs:
• **Chevalier, Pascal**
**F-92402 Courbevoie Cedex (FR)**
• **Pipon, François**
**F-92402 Courbevoie Cedex (FR)**

(74) Mandataire: **Lincot, Georges et al
Thomson-CSF Propriété Intellectuelle,
Département Brevets,
13, Avenue du Président Salvador Allende
94117 Arcueil Cédex (FR)**

(56) Documents cités:
**DE-A- 4 130 863**

• **IEEE TRANSACTIONS ON AEROSPACE AND ELECTRONIC SYSTEMS, vol. 18, NEW YORK US, page 124 BRENNAN ET AL. 'An adaptive array signal processing algorithm for communications'**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

**Description**

La présente invention concerne un procédé et un dispositif permettant à un modem de se synchroniser sur un transmetteur de données numériques par voie hertzienne notamment en présence de brouilleurs.

Dans les systèmes de transmissions de données numériques par voie hertzienne la synchronisation est effectuée, à partir de séquences de symboles connus du récepteur et intercalées entre les symboles d'information, par corrélation entre le signal reçu et un signal de référence construit à partir des symboles connus. Le résultat est comparé à un seuil pour décider de la synchronisation. Des systèmes permettant la synchronisation d'un modem à partir d'un seul capteur et d'un seul récepteur sont par exemple connus de l'article D.V. Sarwate et M.B. Pursely intitulé "Cross correlation properties of pseudo random and related séquences" paru dans IEEE Vol. 66, pp. 593-619, May 1980. Mais les techniques mises en oeuvre qui permettent en outre une estimation des caractéristiques du canal de transmission deviennent rapidement inefficaces en présence de brouillage.

Lorsque le rapport signal à bruit n'est pas suffisant pour la prise de synchronisation par une technique mono-capteur, des techniques visant à accroître le rapport signal à bruit et à permettre la synchronisation sont utilisées.

Ces techniques peuvent être regroupées en deux familles. Une première famille vise à prétraiter le signal reçu avant d'effectuer la synchronisation du signal prétraité. La seconde famille vise à améliorer le rapport signal à bruit et à effectuer la synchronisation conjointement.

Dans les techniques relevant de la première famille il faut également distinguer deux catégories :

- Une première catégorie met en oeuvre un prétraitement mono-capteur de type excision de brouilleurs avant d'effectuer la synchronisation. Ce traitement est connu par exemple de l'article de L.B. MILSTEIN "Interference rejection Techniques in spread spectrum communications", paru dans Proc. IEEE, Vol. 76, pp. 657-661, June 1988. Suivant cet article on cherche à prédire la contribution du brouilleur, dont la bande est supposée plus petite que la bande du signal, sans prédire celle du signal utile. Cela permet d'améliorer les performances de la synchronisation en présence d'interférences bande étroite (type FSK). Mais le traitement reste inefficace en présence d'un brouillage occupant toute la bande utilisée par le signal utile. Cela est en partie due au fait que les techniques de prétraitement mono-capteur ne permettent un traitement des signaux que dans un espace limité à l'axe des temps et à l'axe des fréquences.

- La seconde catégorie concerne les techniques mettant en oeuvre un prétraitement multi-capteurs de réjection, précédant la prise de synchronisation. L'idée consiste à mettre en oeuvre un filtrage spatial, discriminant le signal et les brouilleurs par leur direction d'arrivée, le temps, le spectre ou la puissance comme cela est décrit dans l'ouvrage de R.A. Monzingo, T.W. Miller, intitulé "Introduction to adaptive arrays", édité par John Wiley and Sons, New-York, 1980 et la thèse de P. Chevalier, intitulée "Antenne adaptative : d'une structure linéaire à une structure non linéaire de Volterra", Thèse de doctorat, Université de Paris Sud, Juin 1991 puis de corréler le signal de référence avec la sortie de l'antenne. Les techniques de filtrage spatial discriminant le signal et les brouilleurs par le temps, le spectre ou la puissance sont généralement sous-optimales, alors que celles exploitant la connaissance de la direction d'arrivée du signal nécessitent la mise en oeuvre d'une technique de goniométrie, coûteuse et délicate dans la gamme des fréquences HF notamment du fait des multi-trajets.

Pour ces raisons, les techniques de la seconde famille, visant à effectuer la réjection de brouilleurs conjointement avec la prise de synchronisation, à partir de la connaissance du signal de référence, apparaissent plus prometteuses. Une telle technique a par exemple été proposée par M. Compton dans son article "An adaptive array in a spread spectrum communication system" paru dans Proc. IEEE, vol. 66, pp. 289-298, March 1978, pour la synchronisation de signaux PN, à partir d'une architecture analogique intégrant des "Delay Lock Loop".

Une seconde technique fut proposée par L.E. Brennan et I.S. Reed dans leur article intitulé "An adaptive array signal processing algorithm for communications", paru dans IEEE Trans-Aero-Syst. vol. AES-18, n°1, pp. 124-130, June 1982 pour les transmissions numériques et complétée par D.M. Duglos et R.A. Scholtz dans l'article intitulé "Acquisition of spread spectrum signais by an adaptive array", paru dans IEEE Trans-Acous-Speech-Signal-Proc., vol. ASSP-37, n°8, pp. 1253-1270, August 1989. Ces techniques apparaissent toutefois beaucoup plus coûteuses que les techniques mono-capteur et sont malheureusement inapplicables telles quelles en présence des dérives Doppler du signal inhérentes aux transmissions ionosphériques.

Le but de l'invention est de pallier les inconvénients précités.

A cet effet, l'invention a pour objet un procédé permettant à un modem de se synchroniser sur un transmetteur de signaux numériques par voie hertzienne en présence de brouilleurs consistant à :

- estimer la matrice de corrélation $\hat{R}_{XX}$ de signaux reçus sur un ensemble de N capteurs de réception par blocs composés d'un nombre d'échantillons d'une séquence de synchronisation transmise par le transmetteur,
- à calculer la matrice de corrélation inverse $R_{XX}^{-1}$,

- à calculer des vecteurs d'intercorrélation $\hat{r}_{Xd}$ entre les signaux X(k) reçus sur l'ensemble des N capteurs et un signal de réplique d(k) connu,
- à calculer un critère de synchronisation effectuant le produit scalaire entre le vecteur d'intercorrélation $r_{Xd}$ et le vecteur obtenu par produit de l'inverse de la matrice de corrélation $R_{XX}^{-1}$ et du vecteur d'intercorrélation $r_{Xd}$
- à comparer la valeur du critère obtenu à une valeur de seuil $\eta$ déterminée pour placer la synchronisation sur l'échantillon pour lequel la valeur des critères dépasse la valeur de seuil $\eta$, caractérisé en ce qu'il consiste pour estimer le décalage Doppler inhérent aux communications entre émetteurs et récepteurs, à découper la séquence de synchronisation en un nombre déterminé de M tranches de $k_0$ symboles, à effectuer sur ces tranches des calculs de vecteurs d'intercorrélation partielles $\hat{r}_{Xdi}$ (i=1, ..., M) de telle sorte que sur chacune des tranches de $k_0$ symboles, le décalage Doppler fasse tourner la phase d'une valeur inférieure à 90°, à effectuer des calculs de transformée de Fourier rapide (FFT) sur les vecteurs $\hat{r}_{Xdi}$ obtenus, et à calculer une valeur du critère de synchronisation à partir des vecteurs $\hat{r}_{Xd}(k\Delta f)$, obtenus en résultat des calculs de transformée de Fourier rapide, et de la matrice de corrélation $R_{XX}$.

L'invention a également pour objet un dispositif pour la mise en oeuvre du procédé.

Le procédé et le dispositif selon l'invention ont pour avantages qu'ils permettent à la fois d'assurer la synchronisation d'un modem dans des conditions de brouillage sévère et en présence de multi-trajets, d'estimer la dérive en fréquence entre émetteur et récepteur et de détecter les instants d'arrivée de tous les multi-trajets associés au signal utile, pourvu que ceux-ci soient de puissance suffisamment forte par rapport à la puissance de bruit de fond.

D'autres caractéristiques et avantages de l'invention apparaîtront dans la description qui suit faite au regard des figures des dessins annexés qui représentent :

- La figure 1 un schéma fonctionnel d'une antenne adaptative selon l'invention.
- La figure 2 un exemple de mise en oeuvre d'un filtre adapté spatial à discrimination par la modulation pour la réalisation d'une antenne adaptative selon l'invention.
- La figure 3 un schéma d'antenne adaptative pour la mise en oeuvre du procédé de synchronisation spatiale selon l'invention.
- La figure 4 un graphe pour illustrer la méthode d'estimation de la matrice de corrélation de signaux provenant de N capteurs.
- La figure 5 un graphe pour illustrer le découpage des symboles de la séquence de synchronisation par tranche pour le calcul de vecteur d'intercorrélation en présence de décalage Doppler.
- La figure 6 un graphe montrant l'évolution de critère de synchronisation mis en oeuvre par l'invention en présence d'un décalage Doppler.
- La figure 7 un organigramme retraçant l'ensemble des étapes nécessaires à la mise en oeuvre du procédé de synchronisation selon l'invention.

Le procédé de synchronisation mis en oeuvre par l'invention fait appel aux techniques connues de synchronisation mono-capteur pour les appliquer à la réalisation d'antennes adaptatives sur réplique.

Selon la technique de synchronisation mono-capteur, le critère de synchronisation C(n) est obtenu en calculant la corrélation y(n) entre K symboles connus dans une séquence de synchronisation et les K échantillons qui suivent l'arrivée d'un échantillon n sur le capteur, en normalisant les résultats par la puissance p(n) du signal reçu. Ces calculs sont effectués en appliquant les relations :

$$y(n) = \frac{1}{K} \sum_{k=1}^{K} x(k+n)\, d^*(k) \qquad (1)$$

$$p(n) = \frac{1}{K} \sum_{k=1}^{K} x(k+n)\, x^*(k+n) \quad (2)$$

$$C(n) = \frac{|y(n)|^2}{p(n)} \qquad (3)$$

où :

- x(k) est le signal issu du capteur utilisé,
- d(k) est le signal de réplique connu (K symboles placés en début de trame),
- * représente l'opération de conjugaison sur les nombres complexes.

Ces calculs sont réitérés pour chaque échantillon n, et lorsque le critère C(n) dépasse un certain seuil η, dépendant de la probabilité de fausse alarme, la synchronisation est décidée. L'instant de synchronisation est déterminé par le rang d'échantillon $n_0$ pour lequel $C(n_0) > η$. La normalisation par la puissance p(n) permet de choisir un seuil indépendant du niveau de signal reçu.

Dans ce procédé la synchronisation est obtenue lorsque le rapport signal à bruit est suffisant. Ses performances dépendent en partie du nombre d'échantillons pris en compte pour la corrélation. Cependant en présence de brouilleurs forts, la synchronisation ne peut être effectuée.

L'idée mise en oeuvre dans l'invention consiste alors à effectuer la synchronisation, en sortie d'un traitement d'antenne adaptative, permettant la réjection des brouilleurs.

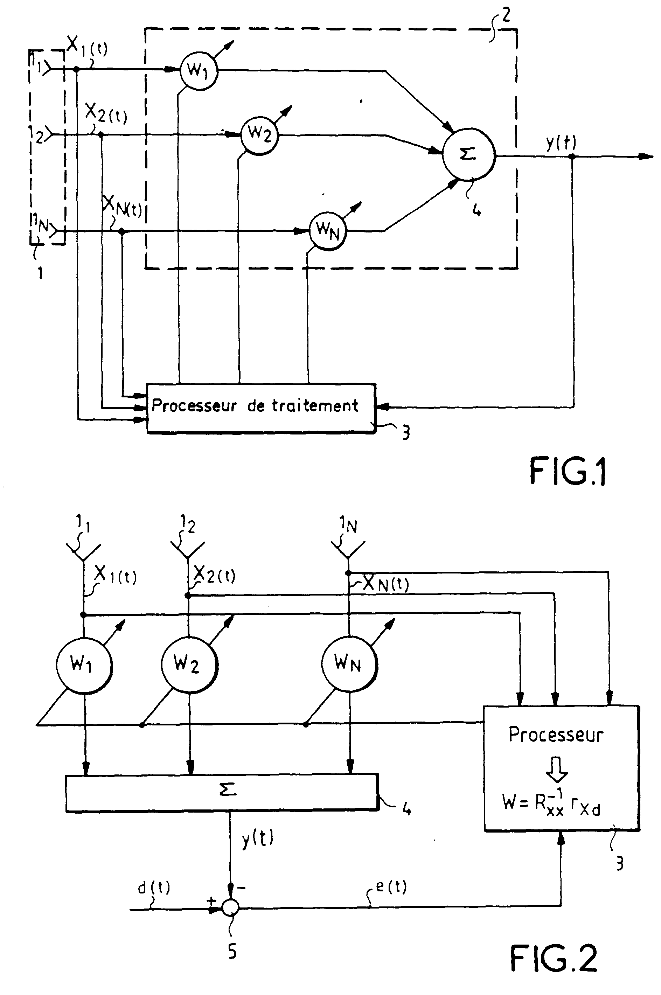

Le schéma fonctionnel d'une antenne adaptative est représenté à la figure 1, celle-ci comporte un réseau 1 de N capteurs $1_1$ ... $1_N$, un réseau de filtres adaptés 2 (constitués par des circuits de pondérations amplitude-phase, des filtres à réponse impulsionnelle finie RIF ou infinie RII) couplé à un processeur de commande adaptatif 3. Le processeur 3 calcule les coefficients $W_1$ à $W_N$ du réseau de filtres 2 pour l'adapter au signal utile et aux brouilleurs, en l'absence de toute connaissance a priori sur les brouilleurs et à partir d'une information minimale sur le signal utile. Les coefficients $W_1$ à $W_N$ permettent de former un trou dans le diagramme de rayonnement du réseau d'antenne dans la direction des brouilleurs, tout en maintenant un certain gain dans la direction du signal utile.

Différents types d'information sur le signal utile sont exploités par l'antenne adaptative. Ceux-ci sont d'ordre spatial lorsque la direction d'arrivée du signal utile est connue, d'ordre temporelle lorsque les instants de présence et d'absence de signal utile sont connus par exemple en évasion de fréquence, relatifs à la forme d'onde lorsqu'une information sur la modulation du signal utile est disponible pour disposer d'une réplique du signal utile en intercalant par exemple des séquences connues dans la trame utile, d'ordre spectral lorsque le signal utile occupe une certaine bande de fréquence et que les brouilleurs occupent une bande plus importante, ou statistiques pour séparer les différentes sources arrivant sur le réseau en exploitant par exemple les statistiques d'ordre 4 des signaux en supposant que les différents signaux sont statistiquement indépendants.

Dans le cas de l'antenne adaptative représentée à la figure 2, l'information sur le signal utile est constituée par les séquences de symboles connus intercalées dans la trame entre les séquences de symboles d'information. Les filtres placés en sortie de chacun des capteurs $1_1$ à $1_N$ sont formés respectivement par des circuits de pondération amplitude-phase $W_1$ à $W_N$ des signaux $X_1(t)$ à $x_n(t)$ fournis par les capteurs. Les signaux obtenus en sortie des circuits de pondération sont appliqués à un circuit de sommation 4.

Les caractéristiques du réseau de filtres 2 sont calculées en minimisant une Erreur Quadratique Moyenne (EQM) estimée ξ entre un signal de réplique d(k) et le signal y(k) sortant de l'antenne de la façon schématisée à la figure 2 où les éléments homologues à ceux de la figure 1 sont repérés avec les mêmes références, ξ est définie par la relation

$$\hat{\xi} = \sum_{k=1}^{K} \left| y(k) - d(k) \right|^2 = \sum_{k=1}^{K} \left| W^t X(k) - d(k) \right|^2 \quad (4)$$

où :

- y(k) est la sortie de l'antenne adaptative et est définie par

$$y(k) = W^t X(k) \quad (5)$$

- W est le vecteur poids définissant l'antenne adaptative, $W^t$ étant le vecteur transposé conjugué correspondant. (le signe t en exposant définit l'opérateur correspondant.)
- X(k) est le vecteur formé par les signaux reçus sur les capteurs.
- d(k) est le signal de réplique connu.

La différence y(k) - d(k) est obtenue sur la figure 2 à la sortie d'un circuit soustracteur 5.

Le vecteur poids W est calculé par la formule connue de Wiener :

$$W = \hat{R}_{XX}^{-1} \, \hat{r}_{Xd} \qquad (6)$$

avec :

$$\hat{R}_{XX} = \frac{1}{K} \sum_{k=1}^{K} X(k).X^t(k) \qquad (7)$$

matrice de corrélation des signaux provenant des capteurs $1_1$ à $1_N$. ($X^t(k)$ étant le vecteur transposé conjugué du vecteur X(k)).

$$\hat{r}_{Xd} = \frac{1}{K} \sum_{k=1}^{K} X(k) \, d^*(k)$$

vecteur d'intercorrélation entre X(t) et d(t) (8).

L'antenne adaptative ainsi utilisée conduit à une maximisation du rapport signal/(bruit + interférence) connu sous la désignation SNIR abréviation anglo-saxonne de "Signal to Noise + Interference Ratio" obtenu en sortie de l'antenne, avec une possibilité de réjection pouvant aller jusqu'à N1 brouilleurs, et est appelée Filtre Adapté Spatial (FAS).

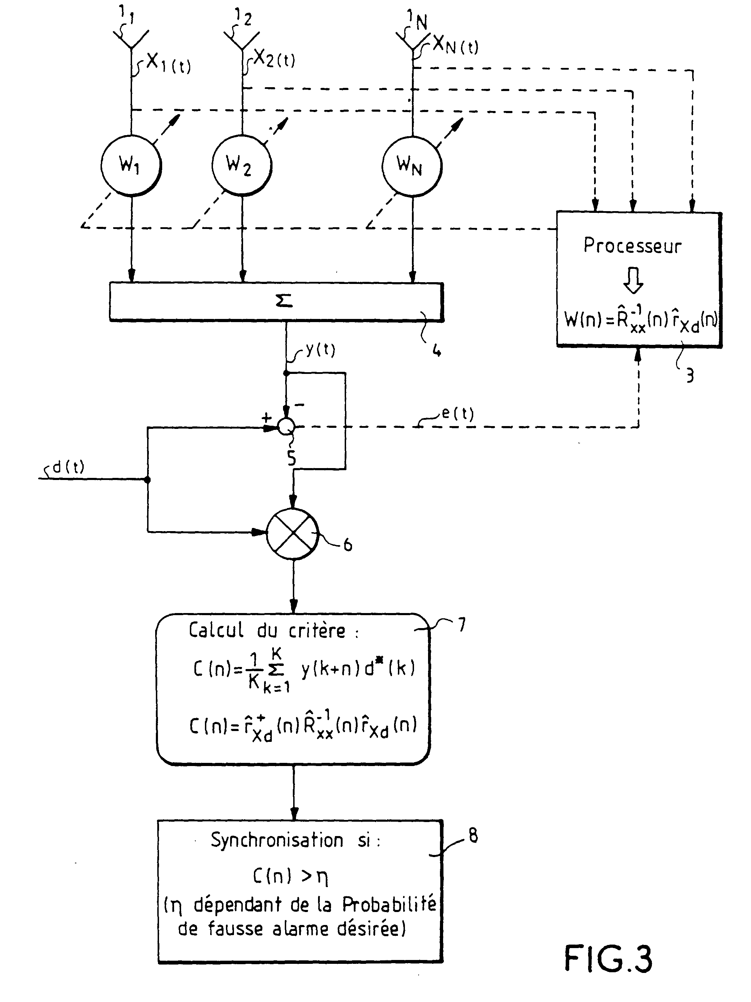

La recherche de la synchronisation est effectuée selon l'invention en sortie de l'antenne adaptative en discriminant le signal selon sa modulation, et en utilisant le critère de synchronisation mono-capteur. Le schéma de principe de la synchronisation spatiale est représenté à la figure 3 où les éléments homologues à ceux des figures 1 et 2 sont représentés avec les mêmes références. Le critère de synchronisation devient, en utilisant les notations précédentes :

$$C(n) = \frac{1}{K} \sum_{k=1}^{K} y(k+n) \, d^*(k) \qquad (9)$$

y(k+n) représente la sortie de l'antenne adaptative conduisant à une minimisation de l'erreur quadratique moyenne $\xi(n)$ estimée sur K échantillons entre la réplique d(k) et le signal arrivant pris à partir de l'échantillon n, suivant la relation

$$\hat{\xi}(n) = \sum_{k=1}^{K} \left| y(k+n) - d(k) \right|^2 \ \text{avec} \ y(k+n) = W(n)^t.X(k+n) \qquad (10)$$

avec :

$$W(n) = \hat{R}_{XX}^{-1}(n). \, \hat{r}_{Xd}(n) \qquad (11)$$

Les différentes corrélations sont calculées sur les K échantillons qui suivent l'arrivée d'un échantillon n suivant les relations :

$$\hat{R}_{XX}(n) = \frac{1}{K} \sum_{k=1}^{K} X(k+n) \, X^t(k+n) \qquad (12)$$

$$\hat{r}_{Xd}(n) = \frac{1}{K} \sum_{k=1}^{K} X(k+n)\, d^*(k) \quad (13)$$

Lorsque l'échantillon n correspond à la position de synchronisation, les poids W(n) définissent le filtre adapté, et y(k+n) contient alors le signal utile débarrassé de la contribution des brouilleurs. Dans le cas contraire, aucun signal n'est corrélé avec la réplique d(k) et y(k+n) ne contient plus alors que la contribution du bruit de fond.

L'expression du critère de synchronisation spatiale se simplifie en écrivant :

$$C(n) = \frac{1}{K} \sum_{k=1}^{K} W(n)^t X(k+n)\, d^*(k) = W(n)^t \left( \frac{1}{K} \sum_{k=1}^{K} X(k+n)\, d^*(k) \right) \quad (14)$$

soit :

$$C(n) = \hat{r}_{Xd}^t(n)\, \hat{R}_{XX}(n)^{-1}\, \hat{r}_{Xd}(n) \quad (15)$$

De même que pour le cas mono-capteur, ce calcul est réitéré pour chaque échantillon n, et lorsque le critère C(n) dépasse un certain seuil $\eta$, dépendant de la probabilité de fausse alarme, la synchronisation est décidée (la normalisation par la puissance est ici obtenue par l'intermédiaire de $R_{XX}^{-1}$).

L'instant de synchronisation est alors déterminé par le rang de l'échantillon pour lequel $C(n_0)$ est supérieur à une valeur de seuil déterminée $\eta$.

Les calculs correspondant sont effectués sur la figure 3 par le bloc 7 de calcul du critère C(n) et par le détecteur de seuil 8, à partir de la séquence de synchronisation d(t) et du signal y(t) corrélés par le corrélateur 6.

Cela nécessite pour chaque échantillon, d'une part de calculer **N** corrélations entre le signal de réplique d(k) et les signaux x(k) reçus par les **N** capteurs (soit **N** fois les calculs effectués pour la synchronisation mono-capteur), et d'autre part, d'estimer puis d'inverser la matrice d'intercorrélation des signaux capteurs.

Au cours de ces calculs la synchronisation et le calcul du filtre adapté 2 sont effectués conjointement. Lorsque la valeur du critère dépasse le seuil $\eta$, calculé, la synchronisation est décidée et le vecteur poids définissant le filtre 2 s'en déduit facilement par la formule connue de Wiener. Le vecteur poids W peut ensuite être utilisé pour filtrer les échantillons contenant l'information.

En supposant que la réplique d(t) est de puissance 1, les corrélations tendent vers les valeurs suivantes, lorsque le nombre d'échantillons K devient très grand :

$$\hat{r}_{Xd} \cong \sqrt{\pi_s}\, S$$

$$\hat{R}_{XX} \cong R + \pi_s\, S\, S^t$$

où :

- R est la matrice de corrélation des interférences et du bruit de fond,
- S est la matrice du vecteur directeur du signal utile,
- $\pi_s$ est la puissance du signal utile reçu sur un capteur.

Le critère de synchronisation qui converge alors vers une valeur $C_0$ s'écrit encore :

$$C_0 = \frac{\pi_s\, S^t R^{-1} S}{1 + \pi_s\, S^t R^{-1} S} = \frac{\text{SNIRopt}}{1 + \text{SNIRopt}} \quad (16)$$

où SNIRopt est le SNIR asymptotique obtenu en sortie du filtre spatial adapté 2.

Lorsque le SNIR est fort, le critère tend vers 1, lorsqu'il est faible, il tend vers 0. L'importance du choix du seuil η, fixe la probabilité de détection de la synchronisation. Le seuil dépend naturellement de la probabilité de fausse alarme souhaitée.

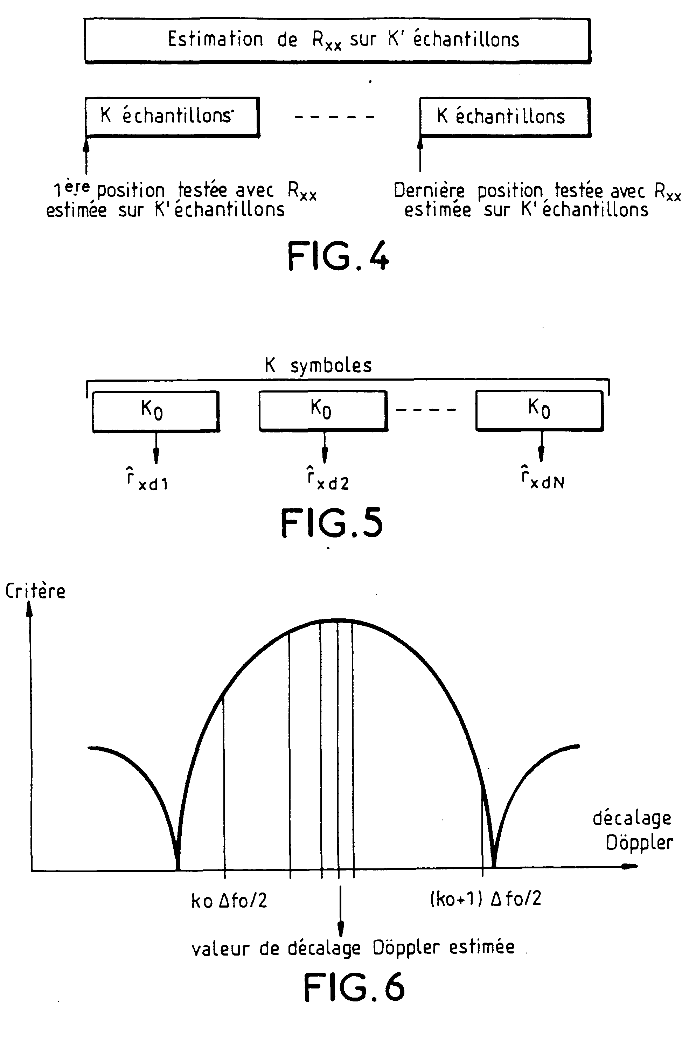

Le calcul du critère de synchronisation C, de $\hat{r}_{Xd}$ et de $\hat{R}_{XX}$ est effectué pour chaque position de la synchronisation et notamment la matrice $R_{XX}$ est estimée et inversée également pour chaque position de la synchronisation, la puissance de calcul demandée est élevée. Mais il est possible de réduire la puissance de calcul en estimant la matrice de corrélation $R_{XX}$ moins souvent sur un intervalle de temps plus important (K' échantillons au lieu de K avec K'>K de la façon représentée à la figure 4) et en utilisant cette estimation de $R_{XX}$ sur toutes les positions de synchronisation incluses dans cet intervalle de temps.

Dans ces conditions la matrice $R_{XX}$ s'écrit :

$$\hat{R}_{XX} = \frac{1}{K'} \left[ \sum_{k=1}^{K'} B(t_k) B^t(t_k) + \sum_{k=K_0}^{K'} S(t_k) S^t(t_k) \right] + \varepsilon \quad (17)$$

où :

- B($t_k$) est la contribution du bruit et des brouilleurs sur X($t_k$),
- S($t_k$) est la contribution du signal utile sur X($t_k$),
- $K_0$ est l'instant d'apparition du signal utile sur le palier,
- $\varepsilon$ est un terme prenant en compte l'intercorrélation entre le signal B(t) et le signal utile S(t), qui tend vers 0 lorsque K devient grand.

Pour la position de synchronisation testée :

$$\hat{r}_{Xd} = \frac{1}{K} \left[ \sum_{k=K_0}^{K_0+K} X(t_k) d^*(k) \right] \quad (18)$$

Dans les conditions asymptotiques (avec K>>1), lorsque le signal utile est synchronisé avec la réplique d(t), $\hat{R}_{XX}$ et $\hat{r}_{Xd}$ se simplifient et s'écrivent :

$$\hat{R}_{XX} \cong R + \frac{K'-K_0 + 1}{K'} \pi_s \, S \, S^t \quad (19)$$

$$\hat{r}_{Xd} \cong \sqrt{\pi_s} \, S \quad (20)$$

Le critère obtenu en estimant la matrice de corrélation $R_{XX}$ sur K' échantillons possède comme valeur asymptotique, après un calcul utilisant le lemme d'inversion matricielle :

$$C'_0 = \frac{SNIRopt}{1 + \dfrac{K'-K_0 + 1}{K'} SNIRopt} \quad (21)$$

Comme

$$\frac{K'-K_0 + 1}{K'} < 1,$$

alors $C'_0 > C_0$

La valeur du critère apparaît dans ces conditions augmentée d'un facteur dépendant de l'instant d'apparition du signal utile sur la fréquence considérée, ce qui entraîne une amélioration de la prise de synchronisation, au prix d'une puissance de calcul réduite.

D'autre part, le nombre K' ne doit pas être choisi trop grand, sa valeur est déterminée pour que sur K' échantillons, l'environnement de brouillage puisse être considéré comme stationnaire.

Le seuil à prendre en considération dépend de la probabilité de fausse alarme (Pfa). La (Pfa) est la probabilité qu'un bruit soit détecté comme une synchronisation. Le calcul de la valeur du seuil $\eta$ a lieu en calculant $Pfa=P(C>\eta)$ lorsque l'antenne reçoit uniquement du bruit.

En présence de bruit, le critère de synchronisation s'écrit :

$$C = \left(\frac{1}{K}\sum_{k=1}^{K}B_k\,d_k^{\,*}\right)^t\left(\frac{1}{K}\sum_{k=1}^{K}B_k\,B_k^{\,t}\right)^{-1}\left(\frac{1}{K}\sum_{k=1}^{K}B_k\,d_k^{\,*}\right) \quad (22)$$

En supposant que $B_k$ est un bruit gaussien complexe de puissance $\sigma^2$, indépendant entre les capteurs, lorsque K est suffisamment grand, le terme du milieu de la relation (22) devient :

$$\left(\frac{1}{K}\sum_{k=1}^{K}B_k\,B_k^{\,t}\right) \cong \sigma^{+2}\,Id \quad (23)$$

(Id étant la matrice identité ou unitaire)

le critère de synchronisation peut alors être approximé de la façon suivante :

$$C \cong \frac{1}{K^2\,\sigma^2}\left(\sum_{k=1}^{K}B_k\,d_k^{\,*}\right)^t\left(\sum_{k=1}^{K}B_k\,d_k^{\,*}\right) \quad (24)$$

Soit:

$$C \cong \frac{1}{K^2\,\sigma^2}\sum_{i=1}^{N}\left(\left|\sum_{k=1}^{K}B_k^{\,i}\,d_k^{\,*}\right|^2\right) \cong \frac{1}{K^2\,\sigma^2}\sum_{i=1}^{N}\left(R_i^2 + I_i^2\right) \quad (25)$$

avec :

$$\sum_{k=1}^{K}B_k^{\,i}\,d_k^{\,*} = R_i + j\,I_i \quad (26)$$

$B_k^{\,i}$ représente le bruit obtenu sur le capteur i, pour l'échantillon k.

$R_i + jI_i$ peut être approximé par un bruit gaussien complexe de variance $K\,\sigma^2$. Dans ces conditions $R_i$ et $I_i$ sont chacun des bruits gaussiens réels de variance $\frac{(K\,\sigma^2)}{2}$. En notant $T_i = R_i$ ou $I_i$, C devient :

$$C \cong \frac{1}{K^2\,\sigma^2}\sum_{i=1}^{2N}\left(T_i^2\right) \quad (27)$$

où $T_i$ est une variable aléatoire qui suit une loi normale centrée de variance $\frac{K\sigma^2}{2}$. La variable aléatoire

$$Z_i = \frac{\sqrt{2}}{\sqrt{K\sigma^2}} \, T_i$$

suit donc une loi normale centrée de variance 1.
C devient :

$$C \cong \frac{1}{2K} \sum_{i=1}^{2N} Z_i^2 \qquad (28)$$

Comme la suite des $Z_i$ peut être considérée comme une suite de 2N variables aléatoires indépendantes gaussiennes de moyennes nulles et de variances 1, la variable aléatoire

$$\sum_{i=1}^{2N} Z_i^2$$

suit une loi du $\chi^2$ à 2N degrés de liberté.
La probabilité d'avoir $C \geq n$ s'écrit alors :

$$p(C \geq \eta) = p\left( \sum_{i=1}^{2N} Z_i^2 \geq 2K\eta \right) = \text{Pfa} \qquad (29)$$

Le tableau suivant donne différentes valeurs de seuils $\eta$ obtenues par recherche dans une table donnant P $(Z \geq A)$ pour une loi du $\chi^2$ à 2N degrés de liberté et pour $\text{Pfa} = 10^{-5}$

| N=5 | $\Rightarrow$ | A = 42 | $\Rightarrow$ | $\eta$=0,26 |
|-----|---------------|--------|---------------|-------------|
| N=4 | $\Rightarrow$ | A=37 | $\Rightarrow$ | $\eta$=0,23 |
| N=3 | $\Rightarrow$ | A=33 | $\Rightarrow$ | $\eta$=0,21 |
| N=2 | $\Rightarrow$ | A=28 | $\Rightarrow$ | $\eta$=0,18 |

.

Comme entre l'émission et la réception, le signal transmis peut être affecté d'un certain décalage en fréquence, ou décalage Doppler, dû essentiellement aux dérives en fréquences des oscillateurs locaux des synthétiseurs à l'émission et à la réception, ainsi qu'aux conditions de propagation ionosphérique, il est nécessaire de compenser ce décalage. Le risque est s'il n'est pas compensé, d'empêcher toute prise de synchronisation.
En appelant $\Delta f_0$, le décalage Doppler entre le signal reçu par l'antenne et le signal attendu et en considérant la position de synchronisation, le vecteur signal reçu peut s'écrire avec les notations des paragraphes suivants :

$$X(t) = \sqrt{\pi_s} \, d(t) e^{2j\pi.\Delta f_0.t} \, S + B(t)$$

La matrice de corrélation estimée peut alors s'écrire :

$$\hat{R}_{XX} = \frac{1}{K} \sum_{k=1}^{K} \left[ \sqrt{\pi_s} \, d(t_k) e^{2.j.\pi.\Delta f_0.t_k} \, S + B(t_k) \right]\left[ \sqrt{\pi_s} \, d(t_k) e^{2.j.\pi.\Delta f_0.t_k}.S + B(t_k) \right]^t \quad (30)$$

$$\hat{R}_{XX} = \varepsilon + \frac{1}{K} \sum_{k=1}^{K} \left[ \pi_s \left| d(t_k) \right|^2 S\, S^t + B(t_k)\, B(t_k)^t \right] \quad (31)$$

où $\varepsilon$ est une matrice prenant en compte les intercorrélations entre la contribution du signal utile et le bruit b(t). Lorsque K>>1, dans les conditions asymptotiques, $R_{XX}$ peut s'approximer par :

$$\hat{R}_{XX} \cong \pi_s\, S\, S^+ + \sigma^2\, Id \qquad (32)$$

La relation (32) montre que le décalage Doppler ne modifie pas le calcul de $R_{XX}$. En effet, le décalage s'élimine naturellement lorsque le signal utile est multiplié par sa quantité conjuguée.

Le vecteur d'intercorrélation peut s'écrire :

$$\hat{r}_{Xd} = \frac{1}{K} \sum_{k=1}^{K} \left[ \sqrt{\pi_s}\ d(t_k)e^{2.j.\pi.\Delta f_0.t_k}\, S + B(t_k) \right] d^*(t_k) \quad (33)$$

$$\hat{r}_{Xd} = \varepsilon' + \frac{1}{K} \sum_{k=1}^{K} \left[ \sqrt{\pi_s} \left| d(t_k) \right|^2 e^{2.j.\pi.\Delta f_0.t_k}\, S \right] \quad (34)$$

où $\varepsilon'$ est un terme prenant en compte l'intercorrélation entre le bruit B(t) et la réplique. Lorsque K>>1, $r_{Xd}$ peut s'approximer par :

$$\hat{r}_{Xd} \cong \left[ \frac{1}{K} \sum_{k=1}^{K} \sqrt{\pi_s} \left| d(kT) \right|^2 e^{2j\pi.\frac{\Delta f_0}{F_e}.k} \right] S \quad (35)$$

La relation (34) montre que le décalage Doppler modifie l'estimation du vecteur d'intercorrélation $r_{Xd}$ et que du fait que la phase du terme en exponentiel complexe peut tourner de plusieurs fois 360° sur l'intervalle de temps utilisé pour le calcul de la corrélation, l'intégration ne peut plus avoir lieu de façon cohérente ce qui empêche le critère de synchronisation multi-capteurs de converger. Le processus suivant permet d'estimer le décalage Doppler et de le compenser pour rendre possible la prise de synchronisation.

Selon ce processus, les K symboles de la séquence de synchronisation sont découpés de la façon représentée à la figure 5 en M tranches de $K_0$ symboles (M $K_0$ = K), de telle sorte que sur chacune des tranches de $K_0$ symboles, le décalage Doppler fasse tourner la phase du signal reçu par l'antenne d'une valeur inférieure à 90°, afin de permettre une intégration cohérente de $r_{Xd}$ sur chacune des tranches.

Si $r_{Xdi}$ désigne la valeur de l'intercorrélation estimée sur la tranche i, celle-ci s'écrit :

$$\hat{r}_{Xdi} \cong \left[ \frac{1}{K} \sum_{k=iK_0+1}^{(i+1)K_0} \sqrt{\pi_s} \left| d(kT) \right|^2 e^{2j\pi.\frac{\Delta f_0}{F_e}.k} \right] S \quad i = 0,...,M-1 \quad (36)$$

En mettant en facteur dans la relation (36) un terme dépendant uniquement de $K_0$, la longueur de la tranche élémentaire considérée, et du décalage Doppler, la relation (36) devient :

$$\hat{r}_{Xdi} \cong \left[\frac{1}{K} \sum_{k=1}^{K_0} \sqrt{\pi_s} \left|d\big((k+iK_0)T\big)\right|^2 e^{2j\pi.\frac{\Delta f_0}{F_e}.k}\right] e^{2j\pi.\frac{\Delta f_0}{F_e}.iK_0} .S \quad i = 0,...,M-1 \quad (37)$$

Ce qui peut encore s'écrire :

$$\hat{r}_{Xdi} \cong x_i\, e^{2j\pi.\frac{\Delta F_0}{F_e}.iK_0} .S \qquad i=0,...,M\text{-}1 \tag{38}$$

La relation (38) montre que les vecteurs $r_{Xdi}$ sont des vecteurs, échantillonnés à $\frac{Fe}{K_0}$. Leur transformée de Fourier discrète est alors :

$$\hat{r}_{Xd}(\Delta f) \cong \sum_{i=0}^{M-1} \hat{r}_{Xdi}\, e^{-2j\pi.\frac{\Delta f}{Fe/K_0}.i} \qquad (39)$$

$$\hat{r}_{Xd}(\Delta f) \cong \sum_{i=0}^{M-1} x_i\, e^{2j\pi.\frac{\Delta f_0 - \Delta f}{Fe}.iK_0}\, S \qquad (40)$$

La relation (40) montre que lorsque $\Delta f = \Delta f_0$, le décalage Doppler est compensé, ce qui rend maximum la valeur du critère de synchronisation $r_{Xd}(\Delta f)^t R_{XX}^{-1} r_{Xd}(\Delta f)$.

Afin d'estimer $\Delta f$, c'est-à-dire afin d'estimer le décalage Doppler qui conduit à la valeur maximale du critère, et afin de réduire le coût de calcul correspondant, une transformée de Fourier rapide est effectuée sur les vecteurs $r_{Xdi}$ (le nombre de tranches élémentaires M étant choisi pour former une puissance de 2) : ce calcul donne :

$$\hat{r}_{Xd}\big(k\Delta f_1\big) \cong \sum_{i=0}^{M-1} \hat{r}_{Xdi}\, e^{-2j\pi.\frac{\Delta f_1}{Fe/K_0}.ik} \cong \sum_{i=0}^{M-1} \hat{r}_{Xdi}\, e^{-2j\pi.\frac{ik}{M}} \qquad k = 0,...,M-1 \quad (41)$$

où $\Delta f_1$ est la résolution Doppler telle que :

$$\Delta f_1 = \frac{Fe/K_0}{M} \tag{42}$$

Si la résolution est insuffisante, une amélioration d'un facteur 2 peut être obtenue en calculant une transformée de Fourier rapide, sur les vecteurs $r_{Xdi}$ "décalées" en fréquence de la façon suivante :

$$\hat{r}_{Xd}\left(k\Delta f_1 + \frac{\Delta f_1}{2}\right) \cong \sum_{i=0}^{M-1} \left(\hat{r}_{Xdi}\, e^{-j\pi.\frac{ik}{M}}\right) e^{-2j\pi.\frac{ik}{M}} \qquad k = 0,...,M-1 \quad (43)$$

L'opération consiste à multiplier chacun des vecteurs d'intercorrélation $r_{Xdi}$ par le terme $e^{-(j\pi i/M)}$ et à effectuer ensuite un calcul de transformée rapide sur les vecteurs ainsi obtenus.

Le critère de synchronisation est ensuite estimé sur chacune des cases de calcul des transformées de Fourier précédentes par la relation :

$$C\left(k\,\frac{\Delta f_1}{2}\right) = \hat{r}_{Xd}^{t}\left(k\,\frac{\Delta f_1}{2}\right) R_{XX}^{-1}\,\hat{r}_{Xd}\left(k\,\frac{\Delta f_1}{2}\right) \quad k = 0,\ldots,2M-1 \qquad (44)$$

Bien évidemment, si la résolution est toujours insuffisante, il est possible de l'améliorer en utilisant le même processus pour calculer des vecteurs

$$\hat{r}_{Xd}\left(k\Delta f_1 + \frac{\Delta f_1}{n}\right)$$

où n est un entier quelconque.

Un test sur la case de la transformée correspondant au maximum du critère de synchronisation est effectué. Si le seuil est dépassé pour une valeur $k_0\,\frac{\Delta f_1}{2}$ donnée du décalage Doppler, il est alors possible d'affiner le calcul du décalage Doppler (indispensable pour la démodulation) en calculant la valeur du critère pour différentes valeurs de décalage Doppler entourant $k_0\,\frac{\Delta f_1}{2}$. En effet, à l'issue de cette étape, la résolution sur l'estimation du décalage Doppler est $\frac{\Delta f_1}{2}$. Pour l'améliorer, il faut procéder par dichotomie : à chaque itération et de la façon représentée à la figure 6, la valeur du critère pour la valeur de décalage Doppler située au milieu des deux valeurs de décalage Doppler donnant les valeurs maxima du critère lors de l'itération précédente est calculée. La recherche par dichotomie est arrêtée dès que la résolution souhaitée sur l'estimation du décalage Doppler est obtenue. Après n itérations de l'algorithme de recherche par dichotomie, la résolution, qui était initialement de $\frac{\Delta f_1}{2}$, est :

$$\frac{\Delta f_1/2}{2^n} = \frac{\Delta f_1}{2^{n+1}} \qquad (45)$$

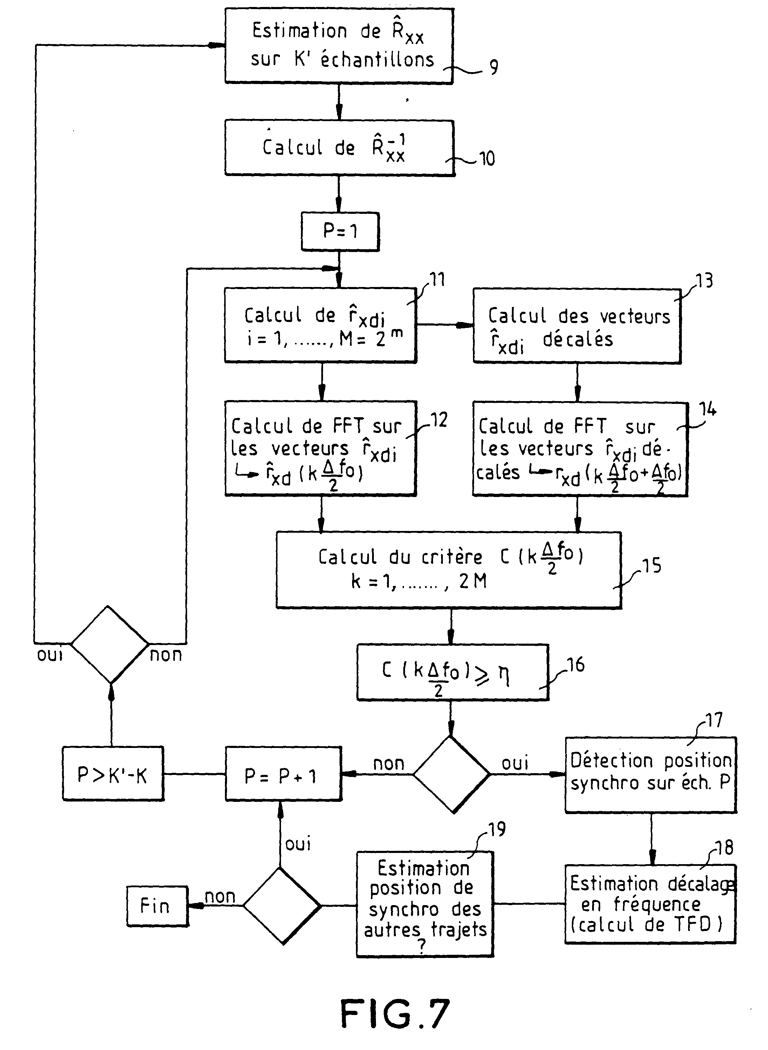

L'enchaînement des étapes de calcul précédente pour la mise en oeuvre du procédé selon l'invention à l'aide de moyens de traitement appropriés formés par exemple par des processeurs de traitement du signal ou tout dispositif équivalent connu est figuré sur l'organigramme de la figure 7.

Il consiste suivant l'étape 9 à estimer la matrice de corrélation $\hat{R}_{XX}$ suivant la relation (7). Cette matrice est estimée sur un bloc contenant un nombre d'échantillons K' supérieur au nombre d'échantillons de la séquence de synchronisation.

L'estimation de $R_{XX}$ est utilisée ensuite pour toutes les positions de synchronisation incluses dans le bloc. Puis la matrice de corrélation inverse $R_{XX}^{-1}$ est calculée à l'étape 10. $r_{Xdi}$ qui est défini par la relation (8) est calculé à l'étape 11. Pour chaque échantillon correspondant à une position de synchronisation P dans la suite des échantillons P = 1 à P = K'-K, $\hat{r}_{Xdi}$ est calculé pour i = 1 à M sur M blocs de $K_0$ symboles comme défini à la figure 5 suivant la relation

$$\hat{r}_{Xdi} = \frac{1}{K_0} \sum_{K=1}^{K_0} X(P+K+iK_0)\,d^*(K+iK_0) \qquad (46)$$

Des calculs de transformée de Fourier Rapide sont effectués à l'étape suivante 12 sur un nombre déterminé M (M = 8 par exemple) de vecteurs $\hat{r}_{Xdi}$ suivant la relation (41).

Aux étapes 13 et 14 un calcul de vecteur $\hat{r}_{Xdi}$ décalé et un calcul de transformée de Fourier rapide suivant la relation (43) sont exécutés pour améliorer la résolution par un facteur de 2.

Le critère de synchronisation est calculé à l'étape 15 en application de la relation (44).

La comparaison du critère ou seuil η est effectuée à l'étape 16. Si à l'étape 16 la valeur du critère

$$C\left(\frac{K\Delta f_1}{2}\right)$$

est supérieure ou égale au seuil, la position de synchronisation est définie à l'étape 17 sur la position P de l'échantillon correspondant. L'estimation du décalage Doppler peut ensuite être affiné à l'étape 18 en calculant à nouveau la valeur du critère de synchronisation pour des décalages Doppler entourant le décalage

$$\left( k_0 \frac{\Delta \tilde{f}_1}{2} \right)$$

précédent. Cette étape peut être suivie par une étape 19 d'estimation de la position de synchronisation pour les autres trajets.

La recherche de synchronisation précédemment décrite est effectuée pour chacun des échantillons de signal numérisé. En pratique, pour améliorer la précision de la position de la synchronisation il est préférable d'effectuer un suréchantillonnage du signal d'un facteur déterminé L, L étant égal à 4 par exemple. Les traitements de l'organigramme de la figure 7 et décrits ci-dessus sont encore utilisables sur le signal ainsi suréchantillonné, mais il est possible d'utiliser une variante dans le procédé, afin de réduire la puissance de calcul nécessaire au traitement. Dans ces conditions, après avoir calculé pour chaque échantillon le vecteur $\hat{r}_{Xdi}$ pour i = 1, ... M sur M blocs de $K_0$ symboles suivant la relation (46) un critère de synchronisation C; est calculé sur chacun des M blocs par la relation

$$C_i = \hat{r}^t_{Xdi} . R^{-1}_{XX} . \hat{r}_{Xdi} \tag{47}$$

Puis un critère somme de l'ensemble des $C_i$ est calculé suivant la relation :

$$C_1(P) = \sum_{i=1}^{M} C_i \tag{48}$$

Ce critère correspond à une intégration non cohérente des Ci (contrairement à ce qui est fait pour le calcul par FFT où on intègre de façon cohérente), ce qui se traduit par une remontée du critère sur les échantillons de bruit.

Le calcul du critère a lieu par blocs de L échantillons consécutifs. Sur chacun de ces blocs, l'échantillon qui donne la valeur maximum de $C_1(P)$ est sélectionné pour effectuer le calcul par transformée de Fourier rapide nécessaire à l'estimation du décalage Doppler comme déjà décrit aux étapes 11 à 19 de la figure 7.

## Revendications

1. Procédé permettant à un modem de se synchroniser sur un transmetteur de signaux numériques par voie hertzienne en présence de brouilleurs consistant à :

    - estimer (9) la matrice de corrélation $\hat{R}_{XX}$ de signaux reçus sur un ensemble de N capteurs de réception ($1_1$ ... $1_N$) par blocs composés d'un nombre d'échantillons d'une séquence de synchronisation transmise par le transmetteur,
    - à calculer (10) la matrice de corrélation inverse $\hat{R}^{-1}_{XX}$,
    - à calculer (11) des vecteurs d'intercorrélation $r_{Xd}$ entre les signaux X(k) reçus sur l'ensemble des N capteurs et un signal de réplique d(k) connu,
    - à calculer un critère de synchronisation (7) effectuant le produit scalaire entre le vecteur d'intercorrélation $r_{Xd}$ et le vecteur obtenu par produit de l'inverse de la matrice de corrélation $R^{-1}_{XX}$ et du vecteur d'intercorrélation $r_{Xd}$
    - à comparer (8) la valeur du critère obtenu à une valeur de seuil η déterminée pour placer la synchronisation sur l'échantillon pour lequel la valeur du critère dépasse la valeur de seuil η, caractérisé en ce qu'il consiste pour estimer le décalage Doppler inhérent aux communications entre émetteurs et récepteurs, à découper la séquence de synchronisation en un nombre déterminé de M tranches de $k_0$ symboles, à effectuer (11, 13) sur ces tranches des calculs de vecteurs d'intercorrélation partielles $r_{Xdi}$ (i = 1, ..., M) de telle sorte que sur chacune des tranches de $k_0$ symboles, le décalage Doppler fasse tourner la phase d'une valeur inférieure à 90°, à effectuer (12, 14) des calculs de transformée de Fourier rapide (FFT) sur les vecteurs $\hat{r}_{Xdi}$ obtenus, et à calculer une valeur du critère de synchronisation à partir des vecteurs $\hat{r}_{Xd}(k\Delta f)$, obtenus en résultat des calculs de transformée de Fourier rapide, et de la matrice de corrélation $R_{XX}$.

2. Procédé selon la revendication 1 caractérisé en ce que l'estimation de la matrice de corrélation $\hat{R}_{XX}$ est obtenue par la relation

$$\hat{R}_{XX} = \frac{1}{K} \sum_{k=1}^{K} X(k).X_{(k)}^{T}$$

et le vecteur d'intercorrélation est estimé suivant la relation

$$r_{Xd} = \frac{1}{K} \sum_{k=1}^{K} X_{(k+p)} d_{(k)}^{*},$$

où p est la position du premier échantillon à partir duquel la corrélation est effectuée entre le vecteur X et la réplique d.

**3.** Procédé selon la revendication 2 caractérisé en ce qu'il consiste à choisir la case de calcul de la transformée rapide qui donne une valeur maximum du critère de synchronisation et à comparer la valeur maximum obtenue à une valeur de seuil déterminée pour décider de la synchronisation.

**4.** Procédé selon l'une quelconque des revendications 1 à 3 caractérisé en ce qu'il consiste pour obtenir une meilleure résolution sur le décalage Doppler et une valeur plus importante du maximum du critère, à calculer (13) des vecteurs $r_{Xdi}$ décalés en fréquence et à effectuer un calcul de FFT sur les vecteurs $r_{Xdi}$ décalés de façon à obtenir la valeur du critère avec une meilleure résolution sur les fréquences Doppler.

**5.** Procédé selon l'une quelconque des revendications 1 à 4 caractérisé en ce qu'il consiste à suréchantillonner les signaux reçus sur les N capteurs par rapport au rythme symbole, pour améliorer la résolution sur la position de synchronisation.

**6.** Procédé selon l'une quelconque des revendications 1 à 5 caractérisé en ce qu'il consiste à effectuer le calcul de la matrice de corrélation $R_{XX}$ sur un nombre d'échantillons K' supérieur au nombre K d'échantillons de la séquence de synchronisation afin de diminuer la puissance de calcul.

**7.** Procédé selon l'une quelconque des revendications 1 à 6 caractérisé en ce qu'il consiste pour diminuer la puissance de calcul et après avoir suréchantillonné d'un facteur L par rapport au rythme symbole, à effectuer une étape de prétraitement consistant à calculer pour chaque échantillon p (p = 1 à L) composant un symbole les valeurs $C_i$ du critère de synchronisation sur chacune des M tranches de $k_0$ symboles et à calculer la valeur du critère en effectuant la somme des critères $C_i$ obtenus pour retenir dans la suite du traitement l'échantillon donnant la valeur maximale du critère $C = \Sigma C_i$.

**8.** Dispositif pour la mise en oeuvre du procédé selon l'une quelconque des revendications 1 à 7 du type comportant, un réseau de N capteurs ($1_1...1_N$) de signaux de réception couplé à un réseau de filtres adaptés (2) comportant des circuits de pondérations amplitude phase commandés par un processeur de commande (3), le processeur de commande (3) étant programmé pour estimer la matrice de corrélation inverse $\hat{R}_{XX}^{-1}$ des signaux reçu $X_{(K)}$ et calculer les vecteurs d'intercorrélation $r_{Xd}$ entre les signaux $X_{(K)}$ reçus et le signal de réplique $d_{(K)}$ caractérisé en ce qu'il comprend des moyens de traitement (5...19) pour :

- calculer un critère de synchronisation (7) en effectuant un produit scalaire entre le vecteur d'intercorrélation $r_{Xd}$ et le vecteur obtenu par le produit de l'inverse de matrice de corrélation $R_{XX}^{-1}$ et du vecteur d'intercorrélation $r_{Xd}$,

  - comparer (8) la valeur du critère obtenu à la valeur de seuil η pour placer la synchronisation sur l'échantillon pour lequel la valeur du critère dépasse la valeur du seuil η, et
  - estimer le décalage Doppler inhérent aux communications entre émetteurs et récepteurs, en découpant la séquence de synchronisation en un nombre déterminé de M tranches de $k_0$ symboles, en effectuant (11, 13) sur ces tranches des calculs de vecteurs d'intercorrélation partielles $r_{Xdi}$ (i = 1,...,M) de telle sorte que sur chacune des tranches de $K_0$ symboles le décalage Doppler fasse tourner à la phase d'une valeur inférieure à 90°, en effectuant (12, 14) des calculs de transformée de Fourier rapide (FFT) sur les vecteurs $\hat{r}_{Xdi}$ obtenus, et en calculant une valeur du critère de synchronisation à partir des vecteurs $r_{\hat{X}d}(K\Delta f)$, obtenus en résultat des calculs de transformée de Fourier rapide et de la matrice de corrélation $R_{XX}$.

**Claims**

1. Method enabling a modem to be synchronized with an RF digital signal transmitter in the presence of jammers consisting in:

    estimating (9) the matrix of correlation $\hat{R}_{xx}$ of signals received on a set of N reception sensors ($1_1 ... 1_N$) by blocks formed by a number of samples of a synchronization sequence transmitted by the transmitter,
    Computing (10) the reverse correlation matrix $\hat{R}_{xx}^{-1}$,
    computing (11) vectors of intercorrelation $r_{xd}$ between the signals X(k) received on the set of the N sensors and a known replica signal d(k),
    computing a criterion of synchronization (7) calculating the scalar product between the intercorrelation vector $r_{XD}$ and the vector obtained by the product of the inverse of the correlation matrix $\hat{R}_{xx}^{-1}$ and the intercorrelation vector $r_{xd}$,
    comparing (8) the value of the criterion obtained with a determined threshold value η to place the synchronization on the sample for which the value of the criteria exceeds the threshold value η,
    characterized in that, in order to estimate the Doppler shift inherent in the communications between transmitters and receivers, said method consists in subdividing the synchronization sequence into a determined number M of sections of $k_o$ symbols,
    carrying out (11, 13) computations, on these sections, of partial intercorrelation vectors $\hat{r}_{xd}$ (i = 1 ... M) in such a way that, on each of the sections of $k_o$ symbols, the Doppler shift causes the phase to rotate by a value of less than 90°,
    carrying out (12, 14) fast Fourier transform (FFT) computations on the vectors $\hat{r}_{xdi}$ obtained,
    and computing a value of the synchronization criterion from the vectors $r_{\hat{x}d}$ (kΔf), obtained as a result of the fast Fourier transform computations and the correlation matrix $R_{xx}$.

2. Method according to Claim 1, characterized in that the estimation of the correlation matrix $\hat{R}_{xx}$ is obtained by the relationship

$$\hat{R}_{xx} = \frac{1}{K}\sum_{k=1}^{K} X(k)\cdot X_{(k)}^{T}$$

    and the intercorrelation vector is estimated according to the relationship.

$$\hat{r}_{xd} = \frac{1}{K}\sum_{k=1}^{K} X_{(k+p)}d*_{(k)}$$

    where p is the position of the first sample from which the correlation is done between the vector X and the replica d.

3. Method according to Claim 2, consisting in choosing the computation bin of the fast Fourier transform that gives a maximum value of the synchronization criterion and in comparing the maximum value obtained with a determined threshold value to decide on the synchronization.

4. Method according to any one of Claims 1 to 3, characterized in that to obtain an improved resolution on the Doppler shift and a greater value of the maximum of the criterion, consists in computing (13) frequency-shifted vectors $r_{xdi}$ and in performing an FFT computation on the shifted vectors $r_{xdi}$ so as to obtain the value of the criterion with higher resolution on the Doppler frequencies.

5. Method according to any one of Claims 1 to 4 characterized in that it consists in oversampling the signals received on the N sensors with respect to the symbol rate to improve the resolution on the synchronization position.

6. Method according to any one of Claims 1 to 5, characterized in that it consists in computing the correlation matrix $\mathbf{R}_{xx}$ on a number of samples K' greater than the number K of samples of the synchronization sequence in order to reduce the computing power.

7. Method according to any one of Claims 1 to 6, characterized in that in order to reduce the computing power and after having carried out an oversampling by a factor L with respect to the symbol rate, it consists in carrying out a pre-treatment step consisting of the computation, for each sample p (p = 1 to L) forming a symbol, of the values Ci of the criterion of synchronization on each of the M sections of $k_0$ symbols and computing the value of the criterion by taking the sum of the criteria Ci obtained to keep, in the subsequent processing, the sample giving the maximum value of the criterion: $C = \Sigma C_i$ .

8. Device for implementing the method according to any one of Claims 1 to 7 of the type comprising a network of N sensors ($1_1...1_N$) of reception signals coupled with a network of adaptive filters comprising amplitude-phase weighting circuits controlled by a control processor, the control processor being programmed to:

estimate the inverse matrix of correlation $\hat{R}_{xx}^{-1}$ of the received signals X(K) and compute the vectors of intercorrelation $r_{xd}$ between the signals X(k) and the replica signal d(k) characterized in that it comprises processing means (5...19) to compute a criterion of synchronization (7) by calculating the scalar product between the intercorrelation vector $r_{xd}$ and the vector obtained by the product of the inverse of the correlation matrix $\hat{R}_{xx}^{-1}$ and the intercorrelation vector $r_{xd}$, compare (8) the value of the criterion obtained with the threshold value $\eta$ to place the synchronization on the sample for which the value of the criteria exceeds the threshold value $\eta$, and estimate the Doppler shift inherent in the communications between transmitters and receivers by subdividing the synchronization into a determined number M of sections of $k_0$ symbols, carrying out (11, 13) computation on these sections, of partial intercorrelations vectors $\hat{r}_{xd}$ (i = 1...M) in such a way that, on each of the sections of $k_0$ symbols, the Doppler shift causes the phase to rotate by a value of less than 90°, carrying out (12, 14) fast Fourier transform (FFT) computations on the vectors $\hat{r}_{xdi}$ obtained, and computing a value of the synchronization criterion from the vectors $r_{xd}(k\Delta f)$, obtained as a result of the fast Fourier transform computations and the correlation matrix $R_{xx}$.

## Patentansprüche

1. Verfahren, mit dem ein Modem sich auf einen Richtfunksender für digitale Signale in Gegenwart von Störquellen synchronisieren kann,

   - wobei die Korrelationsmatrix $\hat{R}_{XX}$ von empfangenen Signalen über eine Gruppe von N Empfangssonden ($1_1$, ..., $1_N$) in Blöcken aus einer Anzahl von Tastproben einer vom Sender übertragenen Synchronisationssequenz geschätzt wird,
   - worauf die inverse Korrelationsmatrix $\hat{R}_{XX}^{-1}$ berechnet wird (10),
   - worauf Interkorrelationsvektoren $r_{Xd}$ zwischen den über die Gesamtheit der N Sonden empfangenen Signalen X(k) und einem bekannten Repliksignal d(k) berechnet werden (11),
   - worauf ein Synchronisationskriterium (7) aus dem Skalarprodukt zwischen dem Interkorrelationsvektor $r_{Xd}$ und dem Vektor berechnet wird, der durch das Produkt des Inversen der Korrelationsmatrix $R_{XX}^{-1}$ und des Interkorrelationsvektors $r_{Xd}$ erhalten wird,
   - worauf der erhaltene Wert des Kriteriums mit einem bestimmten Schwellwert $\eta$ verglichen wird (8), um die Synchronisation auf die Tastprobe festzulegen, für die der Wert des Kriteriums den Schwellwert $\eta$ übersteigt,

   dadurch gekennzeichnet, daß das Verfahren darin besteht, für die Schätzung der Doppler-Verschiebung, die bei Übertragungen zwischen Sender und Empfänger auftritt, die Synchronisationssequenz in eine bestimmte Anzahl von M Abschnitten von $k_0$ Symbolen zu zerlegen, in diesen Abschnitten partielle Interkorrelationsvektoren $r_{Xdi}$ (i = 1, ..., M) so zu berechnen (11, 13), daß in jedem Abschnitt mit $k_0$ Symbolen die Doppler-Verschiebung die Phase um einen Wert unter 90° verdreht, schnelle Fourier-Transformierte (FFT) über die erhaltenen Vektoren $r_{Xdi}$ zu berechnen (12, 14) und einen Wert des Synchronisationskriteriums ausgehend von den als Ergebnis der Berechnungen von schnellen Fourier-Transformierten und der Korrelationsmatrix $R_{XX}$ ausgehend von den Vektoren $r_{Xd}$ (k·$\Delta$f) zu berechnen.

2. Verfahren nach Anspruch 1, dadurch gekennzeichnet, daß die Abschätzung der Korrelationsmatrix $R_{XX}$ durch die

Beziehung

$$\hat{R}_{XX} = \frac{1}{K} \sum_{k=1}^{K} X(k) . X_{(k)}^{\top}$$

erhalten wird und der Interkorrelationsvektor gemäß der Gleichung

$$r_{Xd} = \frac{1}{K} \sum_{k=1}^{K} X_{(k+p)} d_{(k)}^{*}$$

geschätzt wird, wobei p die Position der ersten Tastprobe ist, von der ab die Korrelation zwischen dem Vektor X und der Replik d durchgeführt wird.

3. Verfahren nach Anspruch 2, dadurch gekennzeichnet, daß es darin besteht, dasjenige Rechenfach der schnellen Transformierten zu wählen, das einen Höchstwert des Synchronisationskriteriums liefert, und den erhaltenen Höchstwert mit einem bestimmten Schwellwert zu vergleichen, um über die Synchronisation zu befinden.

4. Verfahren nach einem beliebigen der Ansprüche 1 bis 3, dadurch gekennzeichnet, daß es zur Erzielung einer höheren Auflösung bezüglich der Doppler-Verschiebung und eines größeren Werts des Maximalkriteriums darin besteht, in der Frequenz verschobene Vektoren $r_{Xdi}$ zu berechnen (13) und eine schnelle Fourier-Transformierte über die verschobenen Vektoren $r_{Xdi}$ zu berechnen, sodaß sich der Wert des Kriteriums mit einer besseren Auflösung hinsichtlich der Dopplerfrequenzen ergibt.

5. Verfahren nach einem beliebigen der Ansprüche 1 bis 4, dadurch gekennzeichnet, daß es weiter darin besteht, die von den N Sonden empfangenen Signale bezüglich des Symbolrhythmus zu übertasten, um die Auflösung hinsichtlich der Synchronisationsposition zu verbessern.

6. Verfahren nach einem beliebigen der Ansprüche 1 bis 5, dadurch gekennzeichnet, daß es darin besteht, die Berechnung der Korrelationsmatrix $R_{XX}$ über eine größere Anzahl K' von Tastproben als die Anzahl K von Tastproben der Synchronisationssequenz durchzuführen, um die Rechenleistung zu verringern.

7. Verfahren nach einem beliebigen der Ansprüche 1 bis 6, dadurch gekennzeichnet, daß es zur Verringerung der Rechenleistung und nach der Übertastung um einen Faktor L bezüglich des Symbolrhythmus darin besteht, eine Vorbearbeitung durchzuführen, indem für jede Tastprobe p (p = 1 bis L), die zu einem Symbol gehört, die Werte $C_i$ des Synchronisationskriteriums über jeden der M Abschnitte von $k_0$ Symbolen berechnet werden und der Wert des Kriteriums berechnet wird, indem die Summe der erhaltenen Kriterien $C_i$ gebildet wird, um in der Abfolge der Bearbeitung die Tastprobe festzustellen, die dem Maximalwert des Kriteriums $C = \Sigma C_i$ entspricht.

8. Vorrichtung zur Durchführung des Verfahrens nach einem beliebigen der Ansprüche 1 bis 7 mit einem Netz von N Sonden ($1_1$, ..., $1_N$) zum Empfang von Signalen, das an ein Netz von angepaßten Filtern (2) gekoppelt ist, die von einem Steuerprozessor (3) gesteuerte Amplituden/Phasenwichtungsschaltungen enthalten, wobei der Steuerprozessor (3) so programmiert ist, daß er die inverse Korrelationsmatrix $\hat{R}_{XX}^{-1}$ der empfangenen Signale $X_K$ schätzt und die Interkorrelationsvektoren $r_{Xd}$ zwischen den empfangenen Signalen $X_K$ und dem Repliksignal $d_K$ berechnet, dadurch gekennzeichnet, daß sie Bearbeitungsmittel (5 bis 19) aufweist:

- um ein Synchronisationskriterium (7) zu berechnen, indem ein Skalarprodukt zwischen dem Interkorrelationsvektor $r_{Xd}$ und dem Vektor gebildet wird, der durch das Produkt des Inversen $R_{XX}^{-1}$ der Korrelationsmatrix und des Interkorrelationsvektors $r_{Xd}$ erhalten wird,
- um den Wert des erhaltenen Kriteriums mit dem Schwellwert η zu vergleichen (8), sodaß die Synchronisation auf diejenige Tastprobe gelegt wird, für die der Wert des Kriteriums den Schwellwert η übersteigt,
- und um die Doppler-Verschiebung, die beim Verkehr zwischen Sendern und Empfängern auftritt, zu schätzen, indem die Synchronisationssequenz in eine bestimmte Anzahl M von Abschnitten von Symbolen zerlegt wird, indem in diesen Abschnitten partielle Interkorrelationsvektoren $r_{Xdi}$ (i = 1, ..., M) berechnet werden (11, 13), sodaß in jedem der Abschnitte von $K_o$ Symbolen die Doppler-Verschiebung die Phase um einen Wert unter 90° dreht, indem schnelle Fourier-Transformierte (FFT) zu den erhaltenen Vektoren $r_{Xdi}$ berechnet werden (12, 14) und indem dann ein Wert des Synchronisationskriteriums ausgehend von den Vektoren $r_{Xdi}(K \cdot \Delta f)$ berechnet wird, die sich bei den Berechnungen der schnellen Fourier-Transformierten und der Korrelationsmatrix $R_{XX}$ ergeben.

FIG.1

FIG.2

Processeur

$$W(n) = \hat{R}_{xx}^{-1}(n)\,\hat{r}_{Xd}(n)$$

Calcul du critère :

$$C(n) = \frac{1}{K}\sum_{k=1}^{K} y(k+n)\,d^{*}(k)$$

$$C(n) = \hat{r}_{Xd}^{+}(n)\,\hat{R}_{xx}^{-1}(n)\,\hat{r}_{Xd}(n)$$

Synchronisation si :

$$C(n) > \eta$$

($\eta$ dépendant de la Probabilité
de fausse alarme désirée)

FIG.3

Estimation de $R_{xx}$ sur K' échantillons

K échantillons ----- K échantillons

1$^{ère}$ position testée avec $R_{xx}$ estimée sur K'échantillons

Dernière position testée avec $R_{xx}$ estimée sur K'échantillons

# FIG.4

K symboles

$K_0$          $K_0$   ----   $K_0$

$\hat{r}_{xd1}$          $\hat{r}_{xd2}$          $\hat{r}_{xdN}$

# FIG.5

Critère

décalage Döppler

$k_0 \, \Delta f_0/2$          $(k_0+1) \, \Delta f_0/2$

valeur de décalage Döppler estimée

# FIG.6

FIG.7